(19) Europäisches Patentamt
European Patent Office
Office européen des brevets

(11) EP 2 306 057 B1

(12) # EUROPEAN PATENT SPECIFICATION

(45) Date of publication and mention of the grant of the patent:
**20.11.2013 Bulletin 2013/47**

(21) Application number: **09770184.1**

(22) Date of filing: **24.06.2009**

(51) Int Cl.:
***F16K 31/02*** *(2006.01)* ***B81B 3/00*** *(2006.01)*
***F16K 99/00*** *(2006.01)*

(86) International application number:
**PCT/JP2009/061475**

(87) International publication number:
**WO 2009/157474 (30.12.2009 Gazette 2009/53)**

(54) **MICROVALVE AND VALVE SEAT MEMBER**

MIKROVENTIL UND VENTILSITZELEMENT

MICROSOUPAPE ET ÉLÉMENT DE SIÈGE DE SOUPAPE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **27.06.2008 JP 2008168037**

(43) Date of publication of application:
**06.04.2011 Bulletin 2011/14**

(73) Proprietor: **Murata Manufacturing Co. Ltd.**
**Nagaokakyo-shi, Kyoto 617-8555 (JP)**

(72) Inventors:
- **TAKAHASHI Yuki**
**Nagaokakyo-shi**
**Kyoto 617-8555 (JP)**
- **KOTANI Kenichi**
**Nagaokakyo-shi**
**Kyoto 617-8555 (JP)**

(74) Representative: **Lloyd, Patrick Alexander Desmond et al**
**Reddie & Grose LLP**
**16 Theobalds Road**
**London WC1X 8PL (GB)**

(56) References cited:
**EP-A1- 0 913 609**
**WO-A1-96/17192**
**DE-C- 906 276**
**JP-A- H04 506 105**
**JP-A- 2001 502 248**
**JP-A- 2007 107 715**
**US-B1- 6 736 370**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 306 057 B1

## Description

### Technical Field

The present invention relates to a microvalve, and in particular to a valve that opens and closes an opening through a displacement member, and to a valve seat member used in the valve.

### Background Art

Generally, items such as mobile personal computers that use fuel batteries for electrical power are being developed. Liquid fuels such as methanol and ethanol are used as fuel, and by supplying the fuel to a reacting furnace via a micropump, the reacting furnace causes the fuel and air to react to generate electrical power. In this type of fuel battery system, an unintended flow of fuel in the forward direction due to gravity and the like can occur and unnecessary fuel can be supplied to the reacting furnace even when the pump is stopped. This can lead to a surplus of electric power generation. Micropumps are equipped with check valves; however the check valves are valves for stopping a reverse flow and cannot block a forward flow.

Unexamined Patent Application Publication No, 62-28585 (Patent Document 1) discloses a piezoelectric active valve that includes a valve housing that has a flow inlet and a flow outlet for a fluid, and a valve body that has a tabular piezoelectric element. Specifically, the periphery of the valve body is fixedly held to the valve housing, and an opening is provided in the valve housing region facing the central portion of the valve body. By applying a voltage to the piezoelectric element, the valve body is made to bend in the plate thickness direction and the opening can be opened and closed as a result of the bending.

In general, a valve seat member made of a soft material such as rubber is fixed to the opening since a sufficient seal is not produced by simply making the previously described valve body contact the opening of the valve housing directly. One method of fixing the valve seat is to use an adhesive to fix the valve to the opening of the valve housing. However, when the intended fluid is an organic solvent such as, for example, methanol which is used as a for fuel batteries, there is a possibility that the adhesive will be corroded, the fixing will become unstable, and the bond will be peeled off. Furthermore, if the valve seat is fixed to the valve housing in a tilted state or off-center, the valve seat and the valve body do not make proper contact and stable sealing performance may not be obtained.

### Summary of Invention

An aim of this invention is to provide a microvalve in which a displacement member can open and close an opening of a valve housing with a constantly stable sealing performance, and a valve seat member.

The invention is defined in the independent claims and preferred features are set out in the dependent claims.

The present invention provides a microvalve that includes a valve housing that has an opening, a displacement member that is displaceable in a direction facing the opening, and a valve seat member that is placed in the opening and forms a seal between the valve housing and the displacement member. The valve seat member is fitted in the opening with a certain gap and includes a cylinder portion that has a through hole in the middie, a flange portion that has a larger diameter than the cylinder portion and is formed at one axial end of the cylinder portion, and a seal portion that is formed at the periphery of the flange portion and is thicker than the flange portion. In an open state, at least one of a flow path through the through hole and a flow path through a gap between the cylinder portion and the opening is open. In a closed state, the seal portion is sandwiched between the displacement member and a valve housing seal surface formed around the opening.

A valve seat member according to the present invention is used by a microvalve that includes a valve housing with an opening and a displacement member that is displaceable in a direction facing the opening. The valve seat member, which exhibits a sealing effect when the displacement member closes the opening, includes a cylinder portion that is fitted in the opening with a certain gap and has a through hole in the middle, a flange portion that has a larger diameter than that of the cylinder portion and is formed at one axial end of the cylinder portion, and a seal portion that is formed at the periphery of the flange portion and is thicker than the flange portion and is sandwichable between the displacement member and a valve housing seal surface that is formed around the opening.

According to the present invention, the valve seat member is not fixed to the valve housing, but is movably fitted in the opening of the valve housing. Specifically, the valve seat member includes the cylinder portion, the flange portion, and the seal portion, and the cylinder portion is fitted into the opening so that a gap exists that allows fluid to pass. The seal portion is formed thicker than the flange portion and is sandwichable between the displacement member and the valve housing seal surface that is formed around the opening. In an open state, at least one flow path of a two-path system that is formed by the flow path through the through hole formed in the cylinder portion and the flow path throug the gap between the cylinder portion and the opening, is open. Specifically, when the valve seat member is in contact with the valve housing, fluid can flow through the through hole. Conversely, when the valve seat member is in contact with the displacement member, fluid can flow through the gap formed between the outer surface of the cylinder portion and the inner surface of the opening. Thus, a flow path can be open when the valve seat member is in any posture. In a closed state, both the flow paths of the aforementioned two-path system are closed at the same time due to the valve seat member seal portion being sandwiched between the displacement member and the seal surface. Regardless of the mounting posture, a valve with high reliability can be achieved due to the two-path system in the open state, Furthermore, a valve with wide applicability can be achieved since the opening can be reliably opened or closed even when the pressure upstream or downstream of the opening is high.

The cylinder portion may have a diameter such that the seal portion does not come off the seal surface even when the valve seat member moves the maximum amount in the radial direction of the opening, and may have a length such that the cylinder portion does not come out of the opening when the displacement member is displaced the maximum amount in the direction away from the opening. With this configuration, the valve seat member cannot disengage from the opening if the cylinder is inserted into the opening and the displacement member is attached to the valve housing, and thus a valve with a low height can be achieved. Also, a stable sealing performance can be achieved regardless of the microvalve posture.

The seal portion is formed thicker than the flange portion around the entire periphery of the seal portion. When the seal portion is flat, the surface pressure of the portion where seal surface and the displacement member are in contact is low and the sealing performance deteriorates. Therefore, an annular thick seal portion at the periphery of the flange portion is provided and by sandwiching the seal portion between the seal surface and the displacement member, the seal portion surface pressure increases and a desirable sealing performance is achieved. The portion of the seal portion that is thicker than the flange portion may be rim-shaped or rib-shaped. The cross section of the seal portion may be any shape such as circular or triangular. With a circular or triangular cross section, the seal surface and the displacement member contact portions become linear contacts thus further improving the sealing performance. A circular cross section is more preferred since wear and deformation of the edge is difficult.

The displacement member according to the present invention may use an actuator that can be spontaneously displaced by an application of an electric signal, or may be a member (for example, a diaphragm) that is displaced by an external pressure such as pressure differential and the like. However, a member that is flat without bumps or grooves on the contact surface where the displacement member contacts the valve seat member is preferable. The displacement member may be configured to be normally separated from the valve seat member to maintain the open state and enter a closed state by contacting the valve seat member when displaced (normally open state). Conversely, the displacement member may be configured to be normally touching the valve seat member to maintain a closed state and enter an open state by moving away from the valve seat member when displaced (normally closed state).

An actuator may have a piezoelectric element that bends in the thickness direction by applying a voltage signal. In particular, when using a rectangular plate-shaped piezoelectric element, both longitudinal ends of the piezoelectric element may be held in the valve housing and the seal portion of the valve seat member may be pressed by the longitudinally middle portion of the piezoelectric element. By holding the longitudinal ends of the rectangular plate-shaped piezoelectric element in the valve housing, the longitudinally middle portion has a larger displacement than holding the periphery of a circular plate-shaped piezoelectric element in the valve housing.

When using, as a displacement member, a diaphragm that divides the inside of the valve housing into two valve chambers, a valve seat member may be placed in an opening formed in one of the valve chambers, the diaphragm may be displaced by differential pressure between the two valve chambers, and the seal portion of the valve seat member may be pressed by the diaphragm. In this way, a passive valve can be configured that operates automatically through differential pressure without inputting electric signals from outside.

Advantages

According to the microvalve of embodiments of the present invention, fixing using adhesives is unnecessary since the valve seat member is movably fitted in the opening of the valve housing and so the microvalve can be used even when organic solvents such as methanol are used as fluids. Further, since at least one flow path of the two-path system formed by the flow path through the through hole of valve seat member and the flow path through the gap between cylinder portion of the valve seat member and the opening is open during the open state, the open state can be assured regardless of the posture of the valve seat member, the attachment direction of the valve is not affected, and a microvalve with stable performance can be achieved. Further, since the thick seal portion of the valve seat member is sandwiched between the displacement member and the seal surface of the valve housing, the valve seat member can move by itself to a stable position along with the movement of the displacement member, and a desirable sealing performance can be obtained.

According to the valve seat memberof embodiments of the present invention, the valve seat member can be mounted easily since the valve seat member can be mounted by merely fitting the cylinder portion into the opening of the valve housing. The valve seat member can obtain a stable opening and closing performance even when the amount of displacement of the displacement member is small.

Brief Description of Drawings

Embodiments of the invention will now be described, by way of example only, with reference to the accompanying drawings, in which:

Fig. 1(a) is an external perspective drawing of an example of a valve seat member embodying the present invention, and Fig. 1(b) is a cross section perspective drawing of an example of the valve seat member embodying the present invention.
Fig. 2 is enlarged cross sections of an open state of a microvalve that uses the valve seat member of Fig. 1.
Fig. 3 is enlarged cross sections of a closed state of a microvalve that uses the valve seat member of Fig. 1.
Fig. 4 is a total perspective drawing of a first embodiment of the microvalve according to the present invention.
Fig. 5 is an exploded perspective of the microvalve shown in Fig. 4.
Fig. 6 is a cross section along line VI-VI of Fig. 4.
Fig. 7 is a cross section along line VII-VII of Fig. 4,
Fig. 8 is a cross section along line VII-VII of Fig. 4 when the valve is closed.
Fig. 9 is a cross section along line VII-VII of Fig. 4 of another example when the valve is open.
Fig. 10 is a block diagram of a second embodiment of the microvalve according to the present invention applied to a fuel supply device.
Fig. 11 is cross section of a main part of a third embodiment of the microvalve according to the present invention.
Fig. 12 is cross section of a main part of a fourth embodiment of the microvalve according to the present invention.

Detailed Description of Preferred Embodiments of the Present Invention

Preferred embodiments of the present invention will be described bebw according to the embodiments.

(First Embodiment of Valve Seat Member)

Fig. 1 to Fig. 3 illustrate an example of a valve seat member 17 embodying the present invention. As illustrated in Fig. 1, the valve seat member 17 integrally includes a cylinder portion 17a that has a through hole 17b in the middle, a flange portion 17c that has a lager circumference than the cylinder portion 17a and is formed at one axial end of the cylinder portion 17a. An annular seal portion 17d that is thicker than the flange portion 17c is formed all around the periphery of the flange portion 17c. The valve seat member 17 is desirably integrally formed from rubber material such as fluorine, silicone, or EPDM. The cylinder portion 17a is fitted in an opening 15a of a top plate15 configured as portion of a valve housing 10, and the seal portion 17d contacts the top surface of the top plate 15 (seal surface 15c). The seal portion 17d of the present embodiment is annular and has a circular cross section. The shape of the cross section of the seal portion 17d is not limited to a circular shape. However, preferably the cross section shape is an annular rib that protrudes from the front and back of the flange portion 17c so that a linear contact between a displacement member 20 and the seal surface 15c of the top plate 15 is formed.

Fig. 2 shows an open state (state when the displacement member 20 is separated from the valve seat member 17). The displacement member 20 that is freely displaceable in the direction facing the opening 15a is placed above the top plate 15 to form a valve chamber 16 between the top plate 15 and the displacement member 20. The cylinder portion 17a of the valve seat member 17 is fitted in the opening15a of the top plate 15 so as to be movable in the axial and radial directions. The diameter of the cylinder portion 17a is smaller than the diameter of the opening 15a so that a gap $\delta$ that allows fluid to pass between the cylinder potion 17a and the opening 15a is formed. The seal portion 17d can freely move away from the seal surface 15c and the displacement member 20, and the gap $\delta$ is set so that the seal portion 17d is always above the seal surface 15c even when the cylinder portion 17a is skewed toward one side of the opening 15a. For example, assuming that the diameter of the cylinder portion 17a is D1, the diameter of the seal portion 17d measured from center to center is D2, and the diameter of the opening 15a is D3, then the equation

$$D1 + D2 > 2 \times D3$$

is used for setting.

Furthermore, the length L1 of the cylinder portion 17a is set so that the cylinder portion 17a does not come out of the opening 15a even when the displacement member 20 exhibits the maximum amount of displacement in the direction facing the top plate 15. Specifically, assuming that the maximum distance between the displacement member 20 and the seal surface 15c is L2, and the thickness of the seal portion 17d is L3, then the equation

$$L1 > L2 - L3$$

is used for setting. In other words, the cylinder portion length L1 is greater than the length that the displacement member 20 can move (L2-L3). The length L1 of the cylinder portion 17a is preferably equal to or smaller than the thickness of the top plate 15 to avoid hindering the mountability of the valve. In the present embodiment, the cylinder portion length L1 is the distance from the bottom surface of the seal portion 17d to the tip of the cylinder portion 17a.

In the open state, fluid is allowed to flow regardless of the posture of the valve seat member 17 since the flow is assured with a two-path system made up of a flow path through the gap δ between the cylinder portion 17a and the opening 15a and a flow path through the through hole 17b in the middle of the cylinder portion 17a. Specifically, when the valve seat member 17 is touching the seal surface 15c as illustrated in Fig. 2(a), a flow path is formed through the through hole 17b; when the valve seat member 17 is touching the displacement member 20 as illustrated in Fig. 2(b), a flow path is formed through the gap δ between the cylinder portion 17a and the opening 15a. Fig. 2(b) illustrates the valve in a vertically flipped posture. Since the flow path can be assured when the valve seat member 17 is in any posture, there is no change in the features due to the mounting posture of the valve. Fig. 2 shows the opening 15a as an example of a flow outlet; however the opening 15a may also be a flow inlet. Specifically, the flow direction of the fluid is not limited to flowing out from the valve chamber 16 through the opening 15a. The valve seat member 17 may also be used when fluid is flowing into the valve chamber 16 from the opening 15a.

Fig. 3 shows a closed state (state when the displacement member is displaced toward the opening). The seal portion 17d is sandwiched between the seal surface 15c and the displacement member 20 due to the displacement of the displacement member 20, and the flow paths of the two-path system are closed at the same time. At this time, the cylinder portion 17a is not limited to being positioned in the center of the opening 15a as shown in Fig. 3(a). The cylinder portion 17a may be skewed one side of the opening 15a as shown in Fig. 3 (b). Even in this case, the seal portion 17d is always on the seal surface 15c and sealing performance is not damaged. In particular, when the cross section of the seal portion 17d is circular, a linear contact is made on the displacement member 20 and the seal surface 15c thus achieving a high surface pressure and a more desirable sealing performance.

As previously described, since the valve seat member 17 is not fixed to the valve housing 10, the valve seat member 17 can move by itself to a stable position along with the movement of the displacement member 20 and a desirable sealing performance can be obtained. Further, even if dirt and the like adheres to the surfaces of the seal portion 17d, the seal surface 15c, the displacement member 20, the opening 15a, and the like, a self-cleaning effect that removes dirt via the flow of fluid through the opening 15a can be achieved since the valve seat member 17 can move freely within a certain range

(First Embodiment of Microvalve)

Fig. 4 to Fig. 9 show a first embodiment of a microvalve that uses the valve seat member 17 described above. A microvalve A of the present embodiment is used as an active valve to control the flow of fluids such as methanol. The microvalve A includes a box-shaped valve housing 10 composed of a hard material such as metal or resin, and a rectangular plate-shaped actuator (displacement member) 20. As shown in Fig. 5, the valve housing 10 is a lamination of a rectangular plate-shaped bottom plate 11 that is wider than the actuator 20, a rectangular plate-shaped first frame 12 placed on the upper surface of the bottom plate 11 and with an inside width wider than the actuator 20, a pair of U-shaped press plates 13 placed on the upper surfaces of both longitudinal sides of the first frame 12 and having a thickness approximately the same as the thickness of the actuator 20, a second frame 14 that is placed on the upper surfaces of the actuator 20 and the press plates 13 and having the same shape as the first frame 12, and a top plate 15 that is placed on the upper surface of the second frame 14. Both longitudinal ends of the actuator 20 are fixedly held by the valve housing 10 so that the longitudinal middle of the actuator 20 is freely displaceable.

In the present embodiment, a flow outlet (opening) 15a is formed in a central position of the top plate 15 and a flow inlet 15b is formed at a position on one side so that the central opening 15a is opened and closed by the actuator 20. A flat seal surface 15c is formed on the inner surface of the top plate 15 around the opening 15a. The flow inlet (opening) 15b may be formed in the central position and the flow outlet 15a may be formed at a position on one side. Specifically, the opening in which the valve seat member 17 is fitted may be the flow outlet 15a or the flow inlet 15b. Also, the openings may be formed in the bottom plate 11. The aforementioned portions 11 to 15 are laminated with the actuator 20 in between to configure the valve housing 10. A valve chamber 16 is formed that allows displacement of the actuator 20 between the bottom plate 11 and the top plate 15. The rubber seat member 17 is placed in an unfixed state in the opening 15a opening onto the valve chamber 16. Fig. 6 to Fig. 9 show the microvalve A placed with the top plate on the bottom and the bottom plate on the top. Therefore, the valve seat member 17 is positioned below the actuator 20.

Fig. 8 shows the valve in a closed state due to direct voltage being applied to a piezoelectric element 21 so that the middle portion of the piezoelectric element 21 is projecting downward. The middle portion of the actuator 20 displaces and clamps the seal portion 17d of the valve seat member 17 to the seal surface 15c so that the opening 15a is firmly sealed. Even in a closed state when a high pressure is exerted from the flow inlet 15b, the pressure does not act solely on the bottom surface of the piezoelectric element 21, but also acts on the top surface in the same way so that the closed state can be maintained even without applying a high voltage.

Fig. 9 shows another example of an open state of the valve and shows a state in which direct voltage is applied to the piezoelectric element 21 so that the middle portion of the piezoelectric element 21 is projecting upward (away from the opening 15a). By displacing the actuator 20 upward, the distance between the valve seat member 17 and the actuator 20 can be increased, the flow path space can be increased, and the flow resistance when the valve is open can be reduced. When the valve is open, displacement of the actuator 20 upward as shown in Fig. 9 is not necessary, and the valve may be opened in a state without applying voltage (Fig. 7). Specifically, the actuator 20 may merely be changed between two states: the open state shown in Fig. 7 and the closed state shown in Fig. 8.

In Fig. 7 to Fig. 9, the amount of displacement of the middle portion of the actuator 20 and the distance between the actuator 20 and the valve seat member 17 are described as large to exaggerate the displacement of the actuator 20. Actually however, the amount of displacement of the middle portion of the actuator 20 is small (for example, approximately $\pm 100$ $\mu$m at most) and the distance between the actuator 20 and the valve seat member 17 is very small. Thus, displacing the actuator 20 in a direction away from the opening 15a in the open state as shown in Fig. 9 is effective in reducing flow resistance. Even though the actuator 20 is displaced away as shown in Fig. 9, the length L1 of the cylinder portion 17a is set as described in Fig. 2 so that the valve seat member 17 does not come out of the opening 15a.

The actuator 20 of the present embodiment is made up of the rectangular plate-shaped bimorph piezoelectric element 21. The piezoelectric element 21 has a first region S1 in the longitudinal middle, and second regions S2 at both longitudinal ends (see Fig. 7), and the first region S1 and the second regions S2 bend in the opposite direction when voltage is applied to the piezoelectric element 21. Specifically, when the central first region S1 is displaced to protrude upward, the second regions S2 at both ends are displaced to protrude downward. Conversely, when the central first region S1 is displaced to protrude downward, the second regions S2 at both ends are displaced to protrude upward. As a result, even when both longitudinal ends are fixed by the valve housing 10, a large displacement amount can be achieved in the longitudinal middle portion.

The periphery of the area of the piezoelectric element 21 facing the valve chamber 16 is covered with insulation films 30 and 31 to prevent contact with fluid. The insulation films 30 and 31 are preferably soft, thin films that do not substantially restrict the displacement of the piezoelectruic element 21, and materials that have a high gas barrier performance and are not corroded by fluids. Both longitudinal ends of the piezoelectric element 21 including the insulating films 30 and 31 are placed in a bridging manner on the upper surfaces of both longitudinal ends of the first frame 12, and then the press plates 13, the second frame 14, and the top plate 15 are joined on top so that the portion of the piezoelectric element 21 excluding both of the ends is freely displaceable inside the enclosed valve chamber 16. One end of the piezoelectric element 21 not covered with the insulating films 30 and 31 extends out from the valve housing 10 and power supply wires 32 are connected to the extending portion (see Fig. 4).

Slit-shaped holes 30a and 31 a are formed in both lateral end portions (both side portions along the longitudinal edges of the piezoelectric element 21) of the insulation films 30 and 31. These continuous holes 30a and 31 a are positioned within the valve chamber 16. The lengths of the continuous holes 30a and 31 a are approximately the same as the lengthwise dimension of the valve chamber 16. As a result, both lateral side portions can freely move relative to the valve housing 10 as opposed to both longitudinal ends of the piezoelectric element 21 that are firmly held by the valve housing 10. Furthermore, fluid pressure of fluid that enters from the flow inlet 15b via the continuous holes 30a and 31a in the insulation films 30 and 31 acts not only on the front surface side (side facing the flow outlet 15a) of the piezoelectric element 21, but also acts on the back surface side. Therefore, the pressure on both sides of the piezoelectric element 21 is the same and a relatively small amount of driving power can be used to close the flow outlet 15a. In particular, with a structure in which the flow outlet 15a is opened and closed by the piezoelectric element 21, since the piezoelectric element 21 is pressed against the flow outlet 15a by the high back pressure from the flow inlet 15b in a closed valve state, outflow of fluid can be more effectively prevented. The actuator 20 is not limited to the piezoelectric element configuration described above. A unimorph configuration in which the piezoelectric element is attached to a steel plate, or a bimorph configuration in which piezoelectric elements are attached to both sides of a steel plate may be used. Furthermore, the shape is not limited to a rectangular shape, and a circular shape may be used. Furthermore, besides a normally-open valve with an opened opening in a state in which no electric signal is applied to the actuator, a normally-closed valve may also be used.

(Second Embodiment of Microvalve)

Fig. 10 shows an example of a second embodiment of a microvalve used in fuel cell supply device. In brief, the supply device includes a fuel cartridge 40, a pressure resistant valve 41, a micropump 42, and a microvalve 50. The fuel (for example, methanol) contained in the fuel cartridge 40 is supplied from the microvalve 50 via the pressure resistant valve 41 and the micropump 42 to a fuel cell 43.

The present microvalve 50 is an example of a passive valve that opens according to the motions of the micropump 42, and includes 3 valve housing 51 configured by two upper and lower cases 51a and 51b, and a diaphragm (displacement member) 54 sandwiched between the cases 51a and 51 b and dividing the value housing 51 into a first valve chamber 52 and a second valve chamber 53. The valve housing 51 is made of a hard material such as metal or resin, and the diaphragm 54 is made of a thin resin plate or metal plate. A first flow outlet hole 55 (opening) connected to the fuel cell 43, and a first flow inlet hole 56 connected to a discharge port of the micropump 42 are formed in the first valve chamber 52. A second flow inlet hole 57 receiving fuel from the pressure resistant valve 41, and a second flow outlet hole 58 connected to an intake port of the micropump 42 are formed in the second valve chamber 53. The cylinder portion 17a of the same valve seat member 17 shown in Fig. 1 to Fig. 3 is fitted in the opening 55 with the gap δ.

The micropump 42 is a well known pump whose intake port and discharge port are provided with respective check values. Also, the fuel cartridge 40, the pressure resistant valve 41, and the fuel cell 43 are well known and a detailed explanation is omitted. The pressure resistant valve 42 is not always required.

Herein, the principle of operation of the microvalve 50 will be described. Assuming that the downward acting pressure of the fluid on the top surface of the diaphragm 54 in the second valve chamber 53 is F2, and the upward acting pressure of the fluid on the bottom surface of the diaphragm 54 in the first valve chamber 52 is F1, F1 and F2 may be given as the pressure receiving area × fluid pressure. In the first valve chamber 52, the pressure receiving area on the second valve chamber 53 side is larger than the pressure receiving area on the first valve chamber 52 side since the area inside the seal portion 17d of the valve seat member 17 is excluded from the bottom side pressure receiving area of the diaphragm 54. When F2 > F1, the opening 55 is closed in the first valve chamber 52 since the diaphragm 54 is pressing against the valve seat member 17. Conversely, when F1 > F2, the diaphragm 54 rises and the opening 55 is open in the first valve chamber 52.

Fuel flows into the second valve chamber 53 from the fuel cartridge 40 and then flows into the inlet port of the pump 42. When the pump 42 is not activated, fluid pressure P1 in the first valve chamber 52 becomes lower than a fluid pressure P2 in the second valve chamber 53 only by the amount of pressure loss due to the pump 42; thus P2 > P1. As a result, the force acting on the rise and fall of the diaphragm 54 is F2 > F1, the opening 55 is closed, and fuel is not suppled from the opening 55. When the pump 42 is activated and fuel is supplied to the first valve chamber 52, the pressure P1 gradually increases. When F2 < F1, the diaphragm 54 moves, the opening 55 is opened, and fuel is supplied from the opening 55 to the fuel cell 43.

As shown in Fig. 10, if the valve seat member 17 is placed in the microvalve 50 in a posture below the diaphragm 54, when the diaphragm 54 moves upward and the diaphragm 54 and the valve seat member 17 are separated, the fluid in the first valve chamber 52 can be discharged through the through hole 17b in the valve seat member 17. However, when the microvalve 50 is used in a vertically flipped posture, the valve seat member 17 is able to be displaced while still in contact with the diaphragm 54 when the diaphragm 54 moves toward the second valve chamber 53 side. Even in this case, the fluid in the first valve chamber 52 can be discharged through the gap δ since the gap δ is provided between the opening 55 and the cylinder portion 17a of the valve seat member 17.

When the pump 42 is not activated, since F2 > F1 due to the difference in pressure receiving areas of the first valve chamber 52 and the second valve chamber 53, the diaphragm 54 presses against the valve seat member 17. As a result, the opening 55 can normally be closed and a microvalve with high reliability can be achieved. When pressure inside the fuel cartridge 40 rises due to an increase in the ambient temperature for example, the fuel flows into the pump 42 via the second valve chamber 53. Although the pump 42 has check valves, a forward flow cannot be blocked, and therefore there is a possibility that too much fuel may be supplied to the fuel cell 43. In this case, with the microvalve 50, even when the pressure P2 rises in the second valve chamber 53, the closed state of the opening 55 is maintained and an excess supply of fuel can be prevented since the diaphragm 54 acts by merely pressing against the valve seat member 17 and the relation F2 > F1 is maintained.

(Third Embodiment of Microvalve)

Fig. 11 shows a microvalve of a third embodiment. The valve seat member 17 is the same as shown in Fig. 1 to Fig. 3. The opening 15a of the valve housing 15 has a diameter slightly larger than of the cylinder portion 17a so that the cylinder portion 17a of the valve seat member 17 can slide easily. On the inside surface of the opening 15a, one or a plurality of vertical grooves 15d that extend in the axial direction is formed, and a gap δ is formed due to the vertical grooves 15d. The width of the gap δ is required to be a width that does not reach the position where the seal portion 17d of the valve seat member 17 touches the seal surface 15c. In the present embodiment, the valve seat member 17 can move easily in the valve housing 15 in the axial and rotational directions. However, the valve seat member 17 moves little in the radial direction. As a result, the contact positions of seal portion 17d of the valve seat member 17 and the seal surface 15c and the displacement member 20 are constant and a stable sealing performance can be maintained.

(Fourth Embodiment of Microvalve)

Fig. 12 shows a microvalve of a fourth embodiment. In the present embodiment, only the shape of a seal portion 17e of the valve seat member 17A is different, and other are the same as shown in Fig. 1 to Fig. 3. The seal portion 17e has a triangular cross section and protrudes from the front and back surfaces of the flange portion 17c. In this case, a desired sealing perfomance is also achieved since linear contact is formed between the seal portion 17e and the seal surface 15a of the valve housing 15, and between the seal portion 17e and the displacement member 20.

The present invention is not limited to the aforementioned embodiments, and various modifications are possible. Since the microvalve of the present invention can be configured to be small and short, the microvalve of embodiments of the present invention is effective as a passive valve or an active valve used in water cooling circulation pathways, in fuel cell fuel supply pathways of mobile devices such as personal computers, and the like. However, such uses are not restrictive.

| | |
|---|---|
| A | Microvalve |
| 10 | Valve housing |
| 15 | Top plate |
| 15a | Opening |
| 15c | Seal surface |
| 16 | Valve chamber |
| 17 | Valve seat member |
| 17a | Cylinder portion |
| 17b | Through hole |
| 17c | Flange portion |
| 17d | Seal portion |
| 20 | Actuator (displacement member) |
| 21 | Piezoelectric element |
| 40 | Fuel cartridge |
| 42 | Micropump |
| 43 | Fuel cell |
| 50 | Microvalve |
| 51 | Valve housing |
| 54 | Diaphragm (displacement member) |
| 55 | Opening |

## Claims

**1.** A microvalve comprising:

a valve housing that has an opening;
a displacement member that is displaceable in a direction facing the opening; and
a valve seat member that is placed in the opening and forms a seal between the valve housing and the displacement member; wherein
the valve seat member includes a cylinder portion that is fitted in the opening with a certain gap and has a through hole in the middle, a flange portion that has a larger diameter than the cylinder portion and is provided at one axial end of the cylinder portion, and a seal portion that is provided on the periphery of the flange portion and is thicker than the flange portion; wherein
in an open state, at least one of a flow path through the through hole and a flow path through a gap between the cylinder portion and the opening is open, and in a closed state, the seal portion is sandwiched between the displacement member and a valve housing seal surface formed around the opening.

**2.** The microvalve according to claim 1, wherein:

the cylinder portion has a diameter that does not allow the seal portion to come off the seal surface when the valve seat member has moved the maximum amount in the radial direction of the opening, and a length that does not allow the cylinder portion to come out of the opening when the displacement member has moved the maximum amount away from the opening.

**3.** The microvalve according to claim 1 or claim 2, wherein:

the seal portion has a circular cross section.

**4.** The microvalve according to any one of claims 1 to 3, wherein:

the displacement member includes an actuator that bends in the thickness direction by applying an electrical signal, wherein
a peripheral portion or both end portions of the actuator are held by the valve housing, and
a middle portion of the actuator presses the seal portion of the valve seat member.

**5.** The microvalve according to any one of claims 1 to 3, wherein:

the displacement member includes a diaphragm that divides the valve housing into two valve chambers,
the valve seat member is placed in an opening formed in one of the two valve chambers, and
the diaphragm is displaced by a pressure differential in the two valve chambers and the seal portion of the valve seat member is pressed by the diaphragm.

**6.** A valve seat member used in a microvalve that includes a valve housing with an opening and a displacement member that is displaceable in a direction facing the opening, the valve seat member exhibiting a sealing effect when the displacement member closes the opening, wherein
the valve seat member includes a cylinder portion that is fitted in the opening with a certain gap and has a through hole in the middle, a flange portion that has a larger diameter than that of the cylinder portion and is provided at one axial end of the cylinder portion, and a seal portion that is provided at the periphery of the flange portion and is thicker than the flange portion and is sandwichable between the displacement member and a valve housing seal surface that is formed around the opening.

## Patentansprüche

1. Mikroventil, umfassend:

   ein Ventilgehäuse, das eine Öffnung hat,
   ein Verlagerungselement, das in einer der Öffnung zugekehrten Richtung verlagert werden kann, und
   ein Ventilsitzelement, das in die Öffnung gesetzt ist und eine Dichtung zwischen dem Ventilgehäuse und dem Verlagerungselement bildet, wobei
   das Ventilsitzelement einen Zylinderteil, der mit einem gewissen Zwischenraum in die Öffnung eingebaut ist und in der Mitte ein durchgehendes Loch hat, einen Flanschteil, der einen größeren Durchmesser als der Zylinderteil hat und an einem axialen Ende des Zylinderteils bereitgestellt ist, und einen Dichtungsteil, der am Umfang des Flanschteils bereitgestellt ist und dikker als der Flanschteil ist, beinhaltet, wobei
   in einem offenen Zustand ein Strömungsweg durch das durchgehende Loch und/oder ein Strömungsweg durch einen Zwischenraum zwischen dem Zylinderteil und der Öffnung offen ist und in einem geschlossenen Zustand der Dichtungsteil zwischen dem Verlagerungselement und einer um die Öffnung ausgebildeten Ventilgehäusedichtungsfläche angeordnet ist.

2. Mikroventil nach Anspruch 1, wobei:

   der Zylinderteil einen Durchmesser hat, der den Dichtungsteil nicht von der Dichtungsfläche wegkommen lässt, wenn das Ventilsitzelement sich um den maximalen Betrag in der radialen Richtung der Öffnung bewegt hat, und eine Länge, die den Zylinderteil nicht aus der Öffnung herauskommen lässt, wenn das Verlagerungselement sich um den maximalen Betrag von der Öffnung wegbewegt hat.

3. Mikroventil nach Anspruch 1 oder Anspruch 2, wobei:

   der Dichtungsteil einen kreisförmigen Querschnitt hat.

4. Mikroventil nach einem der Ansprüche 1 bis 3, wobei:

   das Verlagerungselement einen Aktor beinhaltet, der sich bei Anlegen eines elektrischen Signals in der Dickenrichtung biegt, wobei
   ein Umfangsteil oder beide Endteile des Aktors von dem Ventilgehäuse festgehalten werden und
   ein mittlerer Teil des Aktors den Dichtungsteil auf das Ventilsitzelement presst.

5. Mikroventil nach einem der Ansprüche 1 bis 3, wobei:

   das Verlagerungselement eine Membran beinhaltet, die das Ventilgehäuse in zwei Ventilkammern unterteilt,
   das Ventilsitzelement in eine Öffnung gesetzt ist, die in einer der zwei Ventilkammern ausgebildet ist, und
   die Membran von einer Druckdifferenz in den zwei Ventilkammern verlagert wird und der Dichtungsteil des Ventilsitzelements von der Membran gepresst wird.

6. Ventilsitzelement, das in einem Mikroventil verwendet wird, das ein Ventilgehäuse mit einer Öffnung und ein Verlagerungselement, das in einer der Öffnung zugekehrten Richtung verlagert werden kann, beinhaltet, wobei das Ventilsitzelement einen Dichtungseffekt aufweist, wenn das Verlagerungselement die Öffnung schließt, wobei
   das Ventilsitzelement einen Zylinderteil, der mit einem gewissen Zwischenraum in die Öffnung eingebaut ist und in der Mitte ein durchgehendes Loch hat, einen Flanschteil, der einen größeren Durchmesser als den des Zylinderteils hat und an einem axialen Ende des Zylinderteils bereitgestellt ist, und einen Dichtungsteil, der am Umfang des Flanschteils bereitgestellt ist und dicker als der Flanschteil ist und zwischen dem Verlagerungselement und einer um die Öffnung ausgebildeten Ventilgehäusedichtungsfläche angeordnet werden kann, beinhaltet.

## Revendications

1. Microsoupape comprenant:

   un boîtier de soupape comportant une ouverture ;
   un élément de déplacement déplaçable dans un sens faisant face à l’ouverture ; et
   un élément de siège de soupape placé dans l’ouverture et formant un joint entre le boîtier de soupape et l’élément de déplacement ; dans lequel
   l’élément de siège de soupape comporte une partie de cylindre montée dans l’ouverture avec un certain espace et comportant un trou débouchant dans le milieu, une partie de bride ayant un diamètre supérieur à celui de la partie d cylindre et montée à une extrémité axiale de la partie de cylindre, et une partie de joint montée sur la périphérie de la partie de bride et plus épaisse que la partie de bride ; dans lequel
dans un état ouvert, au moins l'un d'un chemin d'écoulement à travers le trou débouchant et d'un chemin d'écoulement à travers un espace entre la partie de cylindre et l'ouverture est ouvert, et dans un état fermé, la partie de joint est prise en sandwich entre l'élément de déplacement et une surface de joint de boîtier de soupape formée autour de l'ouverture.

**2.** Microsoupape selon la revendication 1, dans laquelle :

la partie de cylindre a un diamètre qui empêche la partie de joint de se séparer de la surface de joint quand l'élément de siège de soupape s'est déplacé au maximum dans le sens radial de l'ouverture, et une longueur qui empêche la partie de cylindre de sortir de l'ouverture quand l'élément de déplacement s'est écarté au maximum de l'ouverture.

**3.** Microsoupape selon la revendication 1 ou la revendication 2, dans laquelle :

la partie de joint a une coupe transversale circulaire.

**4.** Microsoupape selon l'une quelconque des revendications 1 à 3, dans laquelle :

l'élément de déplacement comporte un actionneur qui fléchit dans le sens de l'épaisseur en appliquant un signal électrique,
une partie périphérique ou les deux parties d'extrémité de l'actionneur étant retenues par le boîtier de soupape, et
une partie médiane de l'actionneur pressant contre la partie de joint de l'élément de siège de soupape.

**5.** Microsoupape selon l'une quelconque des revendications 1 à 3, dans laquelle :

l'élément de déplacement comporte une membrane qui divise le boîtier de soupape en deux chambres de soupape,
l'élément de siège de soupape est placé dans une ouverture formée dans l'une des deux chambres de soupape, et
la membrane est déplacée par un différentiel de pression dans les deux chambres de soupape et la partie de joint de l'élément de siège de soupape est pressée par la membrane.

**6.** Elément de siège de soupape utilisé dans une microsoupape qui comporte un boîtier de soupape présentant une ouverture et un élément de déplacement qui est déplaçable dans un sens faisant face à l'ouverture, l'élément de siège de soupape présentant un effet de scellement quand l'élément de déplacement ferme l'ouverture, dans lequel
l'élément de siège de soupape comporte une partie de cylindre montée dans l'ouverture avec un certain espace et comportant un trou débouchant dans le milieu, une partie de bride ayant un diamètre supérieur à celui de la partie de cylindre et montée à une extrémité axiale de la partie de cylindre, et une partie de joint montée sur la périphérie de la partie de bride et plus épaisse que la partie de bride et prise en sandwich entre l'élément de déplacement et une surface de joint de boîtier de soupape formée autour de l'ouverture.

FIG. 1

(a)

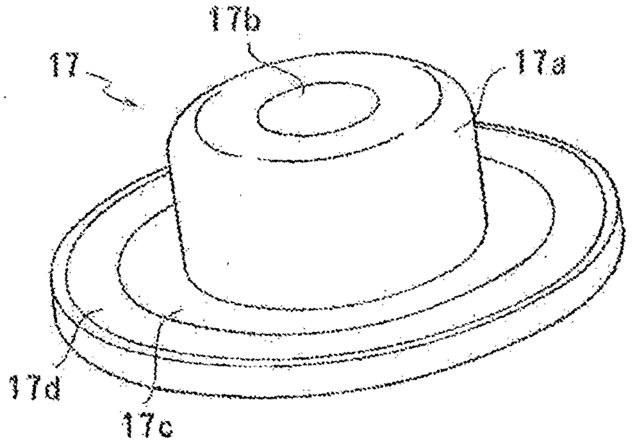


(b)

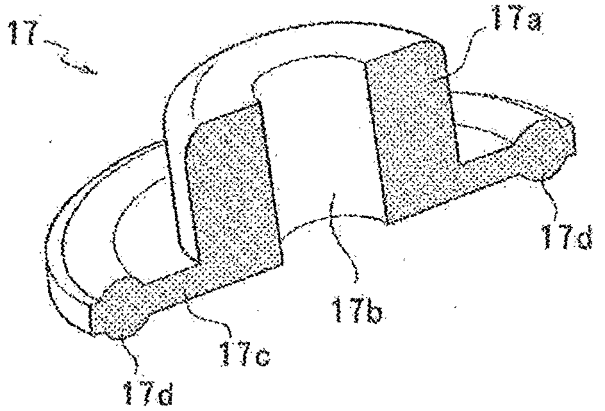

FIG. 2

(a)

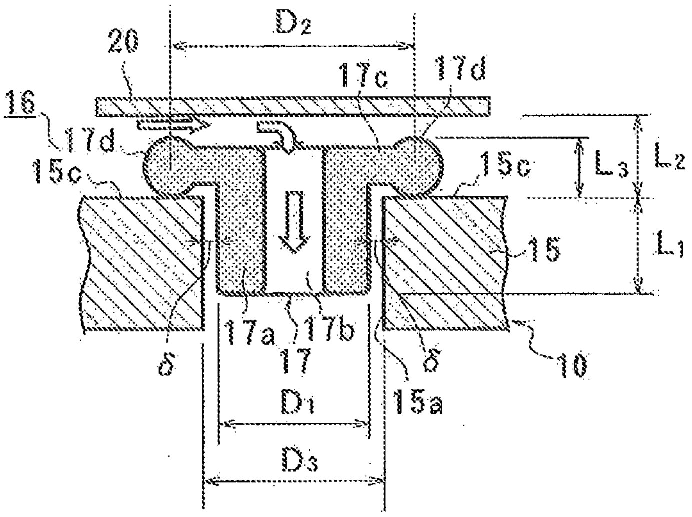
D2
20
17c
17d
16
17d
15c
15c
L3
L2
L1
15
17a
17b
17
δ
δ
10
D1
15a
D3

(b)

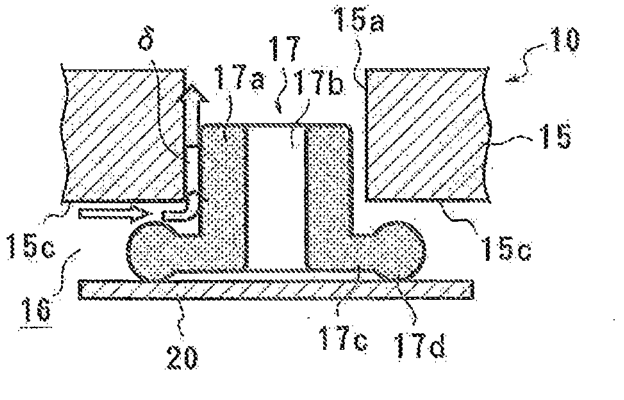
δ
17
15a
10
17a
17b
15
15c
15c
16
20
17c
17d

FIG. 3

(a)

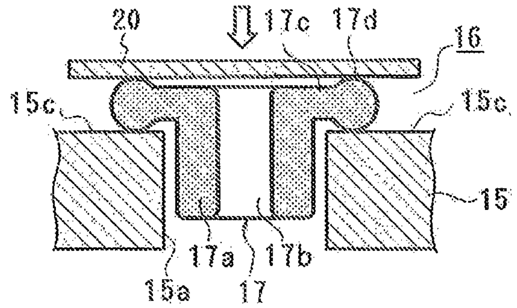
20
17c
17d
16
15c
15c
15
17a
17b
15a
17

(b)

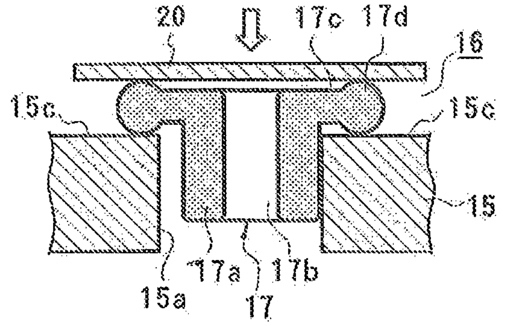
20
17c
17d
16
15c
15c
15
17a
17b
15a
17

FIG. 4

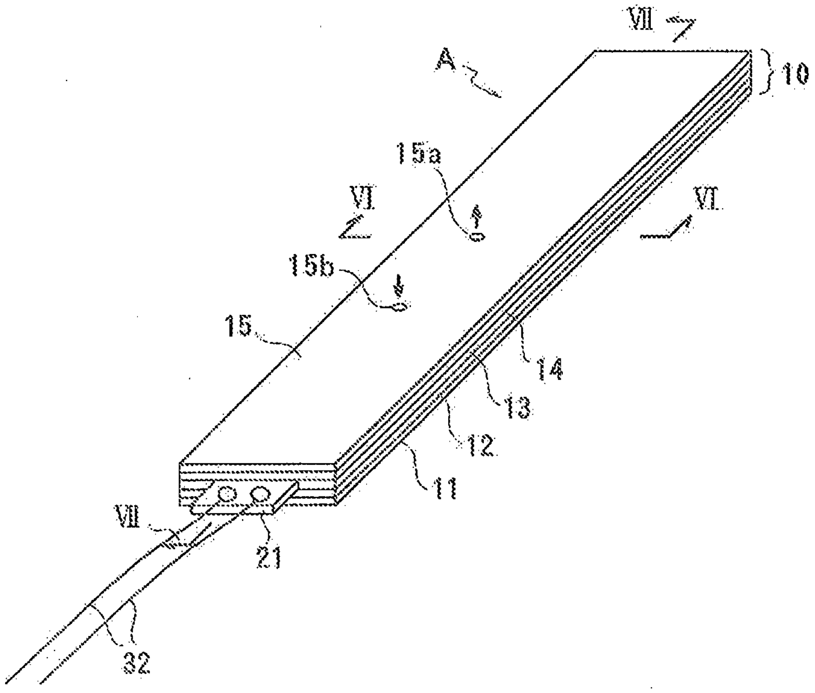
VII
A
10
15a
VI
VI
15b
15
14
13
12
11
VII
21
32

FIG. 5

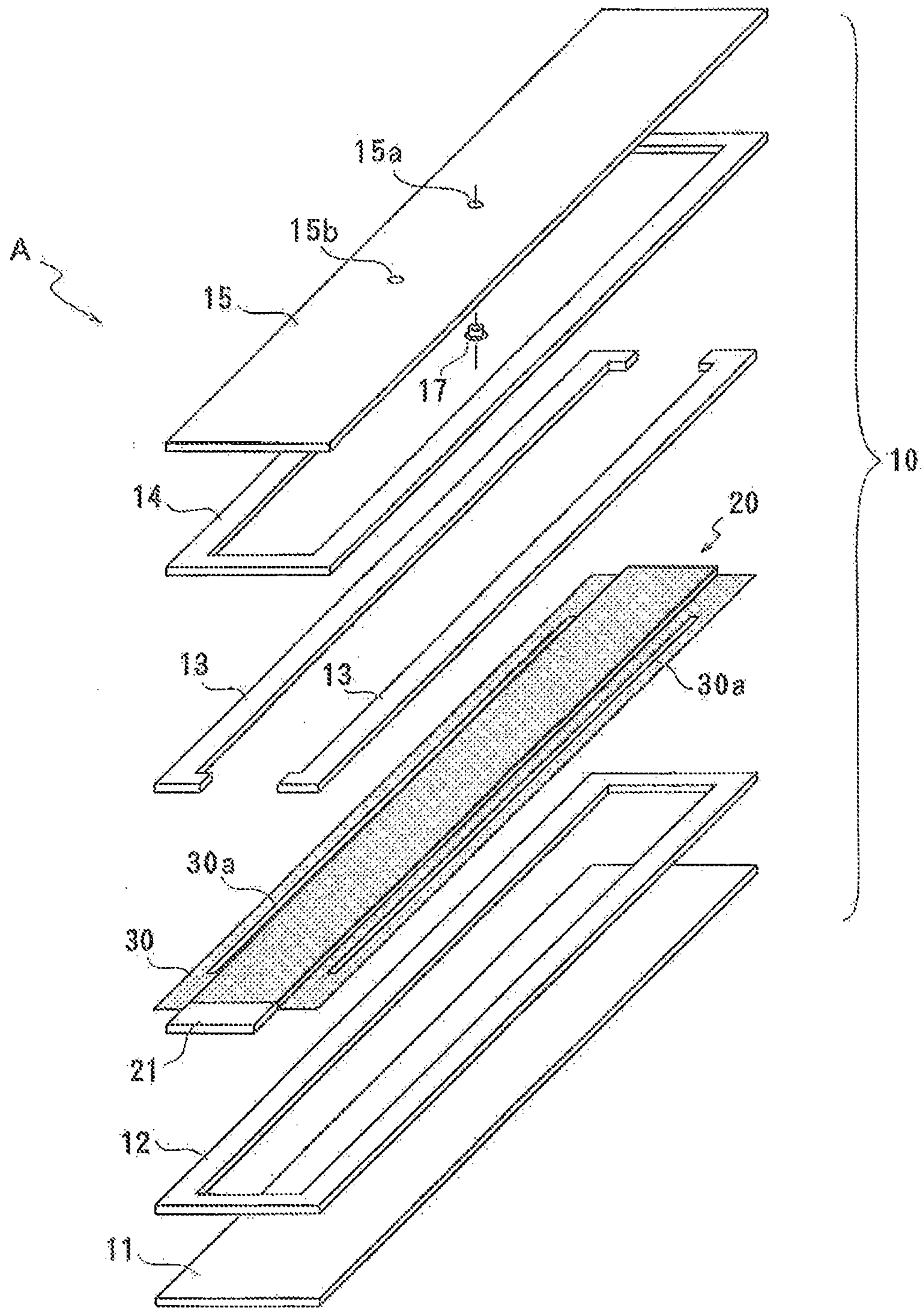

FIG. 6

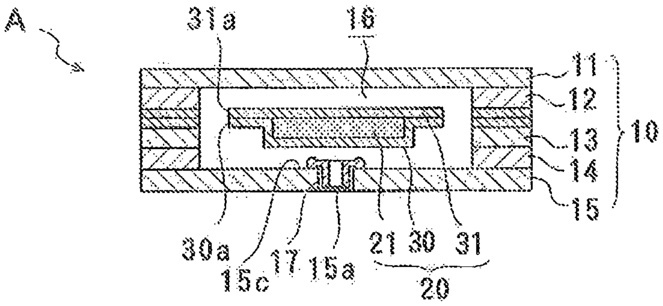


FIG. 7

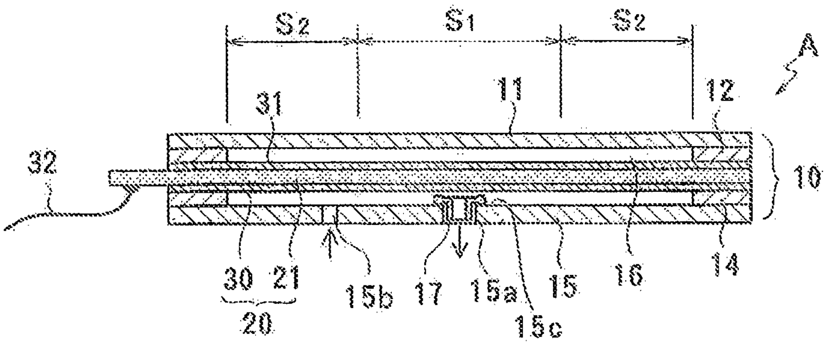


FIG. 8

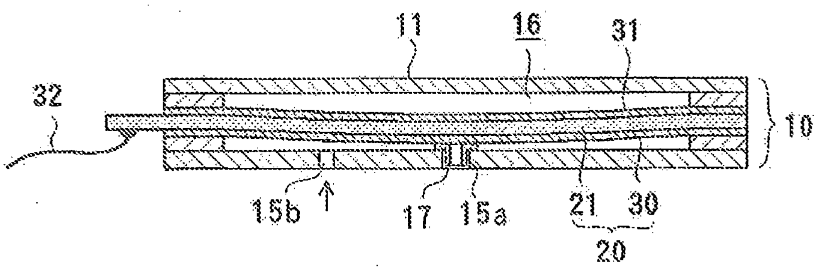


FIG. 9

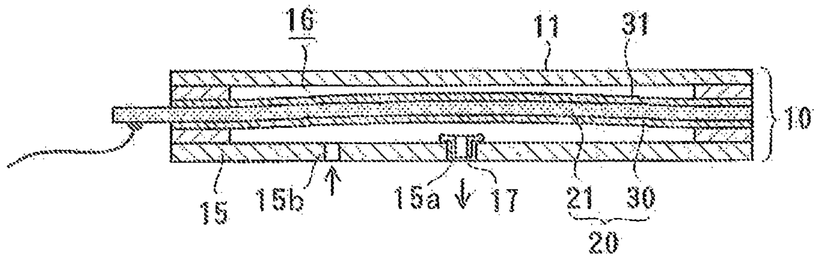

FIG. 10

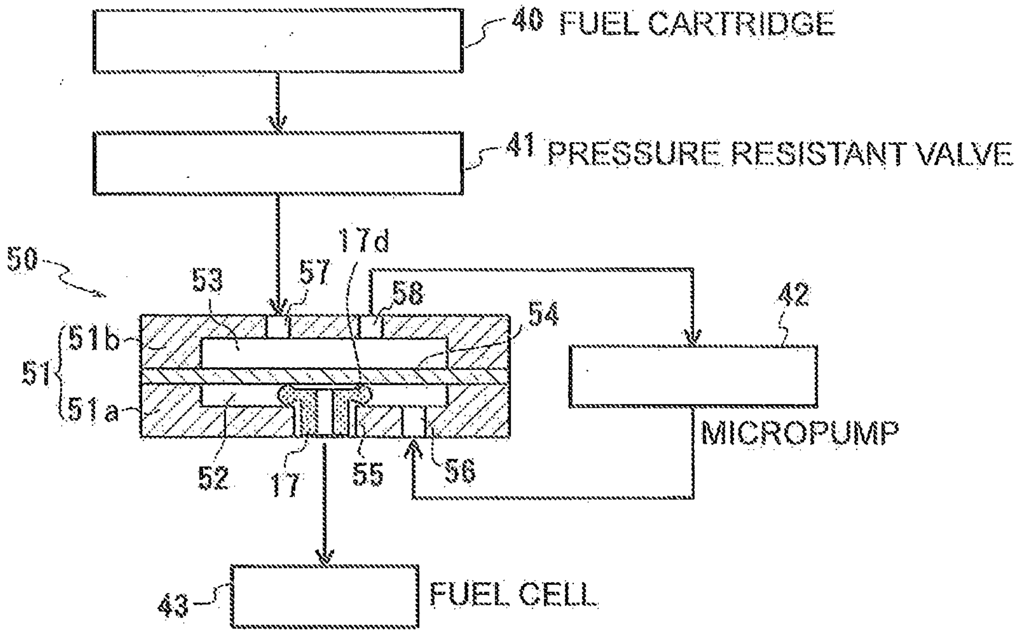
40 FUEL CARTRIDGE
41 PRESSURE RESISTANT VALVE
50
53
57
17d
58
54
42
51b
51
51a
MICROPUMP
52
17
55
56
43
FUEL CELL

FIG. 11

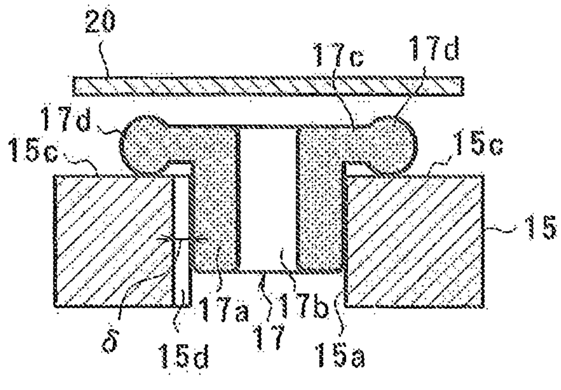
20
17c
17d
17d
15c
15c
15
δ
15d
17a
17
17b
15a

FIG. 12

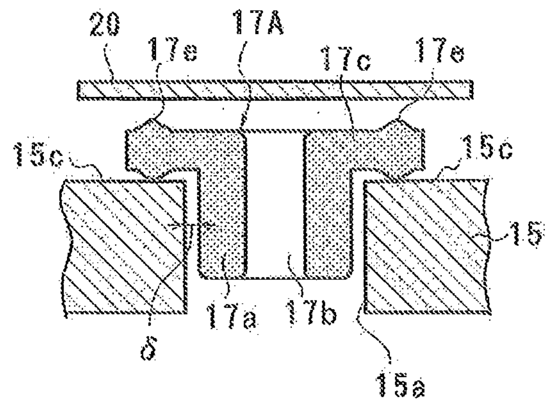

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 6228585 A